# EUROPEAN PATENT APPLICATION

(11) **EP 2 779 703 A1**
(43) Date of publication of application: **17.09.2014**
(21) Application number: 14151909.0
(22) Date of filing: 21.01.2014
(51) Int. Cl.: H04W 4/00, G06F 9/46, H04M 1/725

(54) **Electronic device, indication electronic device and data transmission method**

(30) Priority: 11.03.2013 TW 102108405
(71) Applicant: Acer Incorporated, Taipei County 221 (TW)
(72) Inventor: Tsao, Tzung-Heng, 221 New Taipei City (TW)
(74) Representative: Becker Kurig Straus

(57) **Abstract**

The present invention provides an electronic device including a display, an input detection module and a processor. The input detection module detects an operation on the display executed by an indication electronic device, and generates a first operation signal corresponding to location information of the operation. The processor receives an enable signal from the indication electronic device, and then determines that the electronic device and the indication electronic device are in a first communication mode or a second communication mode. In the first communication mode, the processor obtains a first file corresponding to the location information and stores the first file to the indication electronic device by the communication module. In the second communication mode, the processor obtains a second file from the indication electronic device by the communication module and displays it on the position corresponding to the location information of the display.

## Description

### CROSS REFERENCE TO RELATED APPLICATIONS

This Application claims priority of Taiwan Patent Application No. 102108405, filed on Mar. 11, 2013, the entirety of which is incorporated by reference herein.

### BACKGROUND OF THE INVENTION

### Field of the Invention

The present invention relates to an electronic device, and in particular to an electronic device and a transmission method compatible with a touch panel and an optical detection device.

### Description of the Related Art

With the developing trends of mobile electronic devices, a user may have several mobile electronic devices at the same time, such as a smartphone, a tablet computer, and a laptop computer. The transmission of data between different electronic devices is implemented by a portable storage device, or through the internet or a cloud solution. However, the portable storage device is a hardware device and the interface of each electronic device is different. The internet and the cloud solution are limited to the environment. In addition, operating the electronic device with a touch pen is very convenient for the user. Generally, the touch pen can only touch the screen but cannot transmit or store data. Therefore, a more convenient and easy-to-operate data transmission method is needed.

### BRIEF SUMMARY OF THE INVENTION

The present invention solves the problem of the inconvenience of transmitting data between different portable electronic devices. The present invention provides en electronic device detecting an operation performed by an indication electronic device and generating a first operation signal. The electronic device determines whether the electronic device and the indication electronic device are on a first transmission mode or a second transmission mode after receiving an enable signal from the indication electronic device. The electronic device obtains a first file corresponding to the position information on the first transmission mode, and obtains a second file from the indication electronic device and displays the position corresponding to the position information on the second transmission mode.

The present invention provides an electronic device including a display unit, an input detection module, a communication module and a processor. The input detection module detects an operation performed by an indication electronic device to the display unit and generate a first operation signal, wherein the first operation signal has a position information corresponding to the operation on the display unit; The processor determines whether the electronic device and the indication electronic device are on a first transmission mode or a second transmission mode after receiving an enable signal from the indication electronic device. If the electronic device and the indication electronic device are on the first transmission mode, the processor obtains a first screen image, a first text and/or a first file corresponding to the position information, and stores the first screen image, the first text and/or the first file to the indication electronic device by the communication module. If the electronic device and the indication electronic device are on the second transmission mode, the processor obtains a second screen image, a second text and/or a second file by the communication module and displays the position of the display unit corresponding to the position information.

The present invention provides a data communication method utilized by an electronic device including an input detection module, a display unit, a processor and a communication module. The data communication method includes detecting an operation performed by an indication electronic device to the display unit and generating a first operation signal, wherein the first operation signal has a position information on the display unit corresponding to the operation; determining whether the electronic device and the indication electronic device are on a first transmission mode or a second transmission mode after receiving an enable signal from the indication electronic device; obtaining a first screen image, a first text and/or a first file corresponding to the position information, and storing the first screen image, the first text and/or the first file to the indication electronic device by the communication module if the electronic device and the indication electronic device are on the first transmission mode; and obtaining a second screen image, a second text and/or a second file by the communication module and displaying on the position of the display unit corresponding to the position information if the electronic device and the indication electronic device are on the second transmission mode.

The present invention provides an indication electronic device including an operation signal generator, a memory unit and an indication communication module. The operation signal generator performs an operation to a display unit of an electronic device so that an input detection module of the electronic device generates a first operation signal. The indication communication module receives a first screen image, a first text and/or a first file from the electronic device and stores them in the memory unit on a first communication mode after the indication communication module receives an enable signal, and transmits the first screen image, the first text and/or the first file of the memory unit to the electronic device on a second communication mode.

The present invention provides a data communication method utilized by an indication electronic device including an operation signal generator, a memory unit and an indication communication module. The data communication method includes performing an operation to a display unit of an electronic device so that the electronic device generates a first operation signal; generating an enable signal; receiving a first screen image, a first text and/or a first file from the electronic device and storing them on the memory unit if the electronic device and the indication electronic device are on a first transmission mode; and transmitting a second screen image, a second text and/or a second file to the electronic device if the electronic device and the indication electronic device are on a second transmission mode.

### BRIEF DESCRIPTION OF THE DRAWINGS

The present invention can be more fully understood by reading the subsequent detailed description and examples with references made to the accompanying drawings, wherein:
FIG. 1 is a schematic diagram of an electronic device of the present invention;
FIG. 2 is a flowchart of the data transmission method for an electronic device of the present invention;
FIG. 3 is a flowchart of the data transmission method for an indication electronic device of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

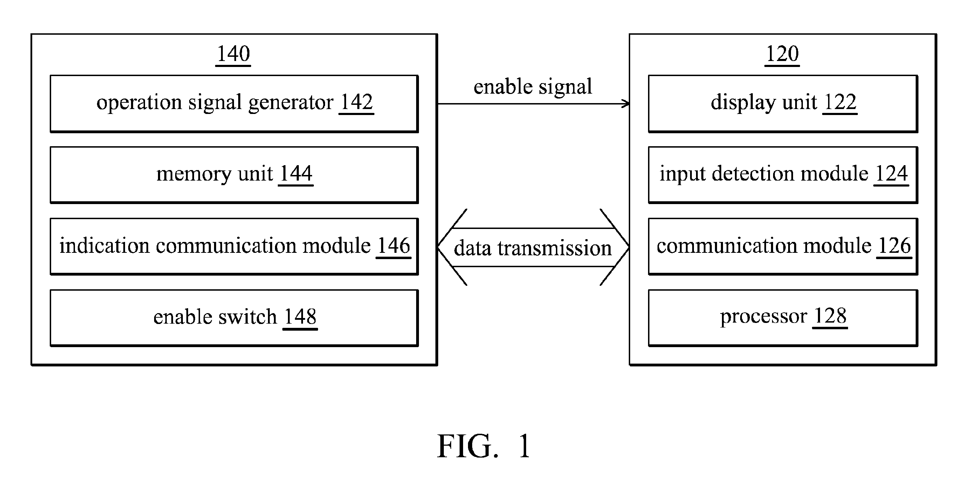

FIG. 1 is a schematic diagram of an electronic device of the present invention. As shown in FIG. 1, the electronic device 120 includes a display unit 122, an input detection module 124, a communication module 126 and a processor 128. Generally, the electronic device 120 could be a mobile electronic device such as a cell phone, a tablet computer, a laptop computer or a PDA, or could it be an electronic device such as a desktop computer or a server. The display unit 122 is utilized to display the operating information and the stored data of the electronic device 120. The input detection module 124 is utilized to detect each input operation performed or implemented on the display unit 122, and to generate a first operating signal (not shown) for corresponding to the location information of the input operation performed or implemented on the display unit 122.

For example, in one embodiment, the display unit 122 is a touch panel with a touch function. The input detection module 124 is the touch detection circuit of the touch panel used to detect the position of the touch operation on the touch panel and generate a first operation signal corresponding to the position information. In another embodiment, the input detection module 124 is an optical detection circuit. When a light beam or a light spot of an infrared light is projected on the display unit 122, the input detection module 124 detects the position where the light beam or the light spot is projected to and generates a first operation signal corresponding to the position information. It should be noted that the light beam or the light spot is not limited to infrared light, but also includes any light visible to the human eye.

The processor 128 is utilized to receive an enable signal SE transmitted by an indication electronic device 140, and determine whether the electronic device 120 and the indication electronic device 140 are in a first transmission mode or a second transmission mode. If the electronic device 120 and the indication electronic device 140 are in the first transmission mode, the processor 128 obtains a first screen image, a first text and/or a first file corresponding to the position information, and transmits or stores the first screen image, the first text and/or the first file to the indication electronic device 140 by the communication module 126. If the electronic device 120 and the indication electronic device 140 are in the second transmission mode, the processor 128 obtains a second screen image, a second text and/or a second file of the indication electronic device 140 by the communication module 126, and displays the position of the display unit 122 corresponding to the position information. In one embodiment, after the processor 128 receives the enable signal SE from the indication electronic device 140, the communication module 126 receives a signal to develop a wireless communication channel with the indication electronic device 146. The wireless communication channel is based on a kind of wireless communication protocol. In other words, the communication module 126 and the indication communication module 146 transmit data with the same wireless communication protocol.

Specifically, the indication electronic device 140 performs an operation on the display unit 122. For example, the indication electronic device 140 touches an icon on the display representing a file, or selects the screen image displayed by the display unit 122. Afterwards, the input detection module 124 detects the operation of the indication electronic device 140 and generates the first operation signal corresponding to the touched position information or the selected position information. When the processor 128 receives the enable signal SE and determines it is in the first communication mode, the processor 128 obtains the touched position information or the selected position information by the first operation signal, so that the processor 128 can obtain the file corresponding to the touched position or obtain the screen image corresponding to the selected position. It should be noted that the first screen image and the second screen image include pictures in the JPEG, GIF, BMP, PNG, or WBMP formats. In addition, the first text and the second text include text in the SMS, MMA or HTML formats. In addition, the first file and the second file include office files in the DOC, TXT, PPT, XLS or PDF formats, audio files in the MP3, WAV, OGG or AAC formats, or video files in the AVI, MPEG4, MOV, XVID, 3GP or 3G2 formats.

It should be noted that the function of the processor 128 could be implemented by a software program. In other words, a processor capable of installing and implementing the software program can be regarded as the processor 128. Regarding the manufacturing process of the product, the processor 128 could be embedded into the electronic device 120 during the manufacturing process, or installed with the software program after the electronic device 120 is manufactured. In addition, the communication module 126 is based on the protocol of wireless communication to transmit data. For example, the protocol of wireless communication includes GSM, GPRS, EDGE, UMTS, W-CDMA, CDMA2000, TD-CDMA, Bluetooth, NFC, WiFi, WiMAX, LTE, LTE-A or TD-LTE.

In addition, as shown in FIG. 1, the indication electronic device 140 includes an operation signal generator 142, a memory unit 144, an indication communication module 146 and an enabling switch 148. The operation signal generator 142 is utilized to label or edit the data transmitted by the indication electronic device 140 on the display unit 122. In one embodiment, the indication electronic device 140 is a touch pen. The operation signal generator 142 performs touch operations on the display unit 122 of the electronic device 120, so that the input detection module 124 generates the first operation signal corresponding to the touch position. In another embodiment, the indication electronic device 140 is an infrared output device. The operation signal generator 142 projects the light beam or light spot of the infrared light to the display unit 122 of the electronic device 120, so that the input detection module 124 generates the first operation signal corresponding to the projection position. In addition, there are many methods for the indication electronic device 140 to label or edit data on the display unit 122, which will be illustrated in detail in the following embodiments.

The memory unit 144 is utilized to store the data transmitted or received by the indication electronic device 140. The indication communication module 146 is utilized to connect the electronic device 120, transmit the data stored by the memory unit 144 or receive the data transmitted by the electronic device 120. The enabling switch 148 generates the enable signal SE transmitted to the electronic device 120. The enable signal SE is utilized to determine whether the electronic device 120 and the indication electronic device 140 are in the first communication mode or the second communication mode. In one embodiment, after the enabling switch 148 transmits the enable signal SE to the electronic device 120, the indication communication module 146 receives a signal to develop the wireless communication channel with the communication module 126. The wireless communication channel is based on a wireless communication protocol. In other words, the indication communication module 146 and the communication module 126 adopt the same wireless communication protocol for data transmitting.

For example, in one embodiment, the enabling switch 148 is a multiple switch. When the first sub-switch of the multiple switch is opened, pressed or rotated, then the enabling switch 148 generates the enable signal SE indicating the first communication mode. When the second sub-switch of the multiple switch is opened, pressed or rotated, then the enabling switch 148 generates the enable signal SE indicating the second communication mode. In another embodiment, the enabling switch 148 is a single switch. Whether the enable signal SE generated by the enabling switch 148 indicates the first communication mode or the second communication mode is determined by the operation mode (such as the pressing time, the pressing force, the number of presses, or the angle of rotation). If the first communication mode is indicated, then the indication communication module 146 receives the first screen image, the first text and/or the first file from the electronic device 120 and stores them in the memory unit 144. If the second communication mode is indicated, then the indication communication module 146 transmits the second screen image, the second text and/or the second file stored by the memory unit 144 to the electronic device 120.

It should be noted that the enable signal SE can be generated by the enabling switch 148. In other embodiments, the enable signal SE is the second operation signal generated by the second touch operation or the second optical signal transmitted from the operation signal generator 142 to the display unit 122. The second touch operation is different from the first touch operation, the second optical signal is different from the first optical signal, and the second operation signal is different from the first operation signal. For example, in one embodiment, if the first communication mode is indicated, then the first touch operation generated by the operation signal generator 142 is on the first region of the display unit 122. If the second communication mode is indicated, then the second touch operation generated by the operation signal generator 142 is on the second region of the display unit 122. In another embodiment, if the first communication mode is indicated, then the first touch operation generated by the operation signal generator 142 is drawing a circle on the display unit 122. If the second communication mode is indicated, then the second touch operation generated by the operation signal generator 142 is drawing a triangle on the display unit 122. In addition, if the enabling switch 148 does not generate the enable signal SE, then the indication electronic device 140 is in a pre-determined communication mode rather than the first communication mode or the second communication mode. In other words, the indication electronic device 140 is only utilized to label or operate the electronic device 120, but not store the data from the electronic device 120 or transmit data to the electronic device 120.

The methods of the indication electronic device 140 labeling or editing data are illustrated in detail on the following embodiments. In one embodiment, the indication electronic device 140 is an infrared output device projecting an infrared light beam or an infrared light spot to the icon on the display unit 122 to indicate a file. The electronic device 120 generates a first operation signal corresponding to the projecting position (i.e. the position of the icon). Then the processor 128 receives the enable signal SE from the infrared output device to determine the infrared output device and the electronic device 120 are in the first communication mode or the second communication mode. If the infrared output device and the electronic device 120 are in the first communication mode, then the communication module 126 transmits the file indicated by the icon through a wireless communication protocol and stores it on the infrared output device. If the infrared output device and the electronic device 120 are in the second communication mode, then the communication module 126 receives another file transmitted by the infrared output device through a wireless communication protocol. It should be noted that if the storage space required for the file is so large that the communication module 126 needs to spent a long transmitting time, then the processor 128 compresses the file or divides the file into two or more files of smaller storage spaces to reduce the transmitting time. In addition, the two or more files of smaller storage spaces compressed or divided by the processor 128 could be stored temporarily on a register or a memory (not shown) of the electronic device 120.

In another embodiment, the indication electronic device 140 is a touch pen, and the display unit 122 is a touch panel with a touch function. The touch pen performs touch operations on the display unit 122 and selects parts or all of the screen images displayed by the display unit 122. Then the electronic device 120 generates the first operation signal corresponding to the selected position. Then the processor 128 receives the enable signal SE from the touch pen to determine the touch pen and the electronic device 120 are in the first communication mode or the second communication mode. If the touch pen and the electronic device 120 are in the first communication mode, then the communication module 126 transmits the selected screen image through a wireless communication protocol and stores it on the touch pen. In other words, the touch pen copies the selected screen image on the display unit 122. If the touch pen and the electronic device 120 are in the second communication mode, the operation method is the same as illustrated before and not repeated again.

In another embodiment, the indication electronic device 140 is a touch pen, and the display unit 122 is a touch panel with the touch function. The electronic device 120 displays a screen image of an electronic book including the information to record the reading status of the electronic book. Then the touch pen selects the screen image and generates the enable signal indicating the first communication mode, and the communication module 126 stores the selected screen image on the touch pen. In other words, the touch pen copies the screen image of the electronic book and records the reading status of the electronic book. Then the touch pen touches the display unit (not shown) of another electronic device (not shown) and generates the enable signal indicating the second communication mode, and the communication module (not shown) of another electronic device receives the screen image from the touch pen. In other words, the touch pen pastes the screen image of the electronic device to another electronic device so that the reading status of the electronic device is updated to another electronic device simultaneously.

In another embodiment, the indication electronic device 140 is a touch pen, and the display unit 122 is a touch panel with the touch function. The electronic device 120 displays the browsing web page. Then the touch pen selects the web address (i.e, a text) of the web page and generates the enable signal SE indicating the first communication mode, and the communication module 126 stores the selected web address on the touch pen. In other words, the touch pen copies the web address of the web page. Then the touch pen touches the display unit 122 of electronic device 120 and generates the enable signal SE indicating the second communication mode, and the communication module 126 receives the web address from the touch pen. In other words, the touch pen pastes the web address of the browsing web page to the electronic device 120 so that the electronic device 120 could display the browsing web page continuously.

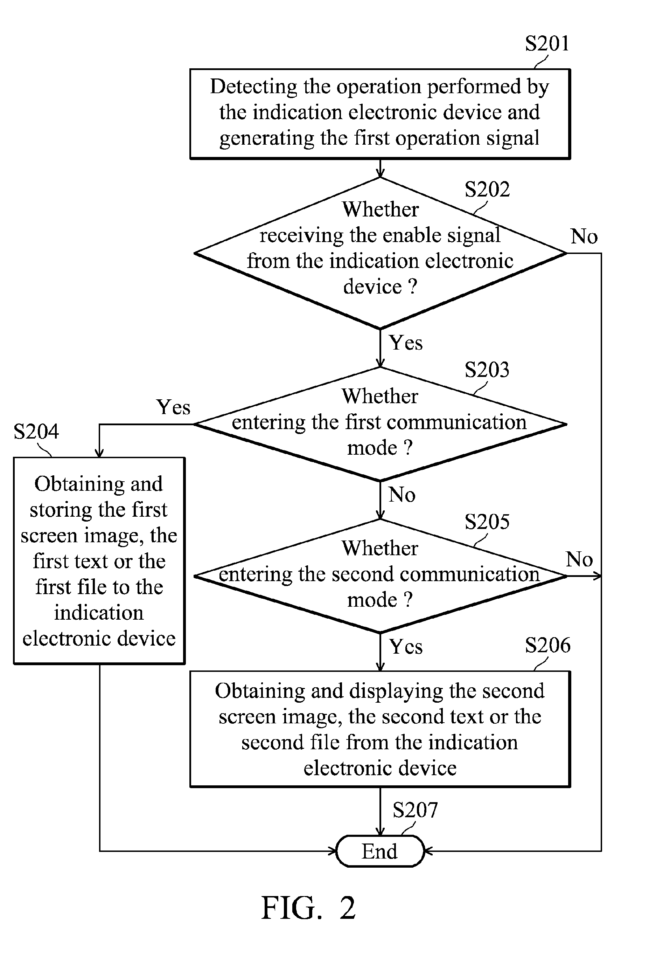

FIG. 2 is a flowchart of the data transmission method for an electronic device of the present invention. Firstly in step S201, the electronic device 120 detects the operation performed by the indication electronic device 140 and generates the first operation signal. Then, step S202 is performed to determine whether the enable signal from the indication electronic device 140 has been received. If the enable signal from the indication electronic device 140 has been received, then step S203 is performed to determine whether to enter the first communication mode. If the enable signal from the indication electronic device 140 is not received, then step S207 is performed to end the process flow. If the first communication mode is entered in step S203, then step S204 is performed so that the electronic device 120 obtains and stores the first screen image, the first text or the first file to the indication electronic device. If the first communication mode is not entered, then step S205 is performed to determine whether to enterthe second communication mode. If the second communication mode is entered on step S205, then step S206 is performed so that the electronic device 120 obtains and displays the second screen image, the second text or the second file from the indication electronic device. Then the process flow goes to step S207 for completion. If the second communication mode is not entered, then the flow goes to step S207 for completion. For a detailed procedure of the above steps, refer to the illustration of FIG. 1, as it is not repeated again. It should be noted that in another embodiment, step S202 is performed before step S201. In other words, the electronic device 120 determines whether the enable signal has been received from the indication electronic device 140, then detects the operation performed by the indication electronic device 140 and generates the first operation signal.

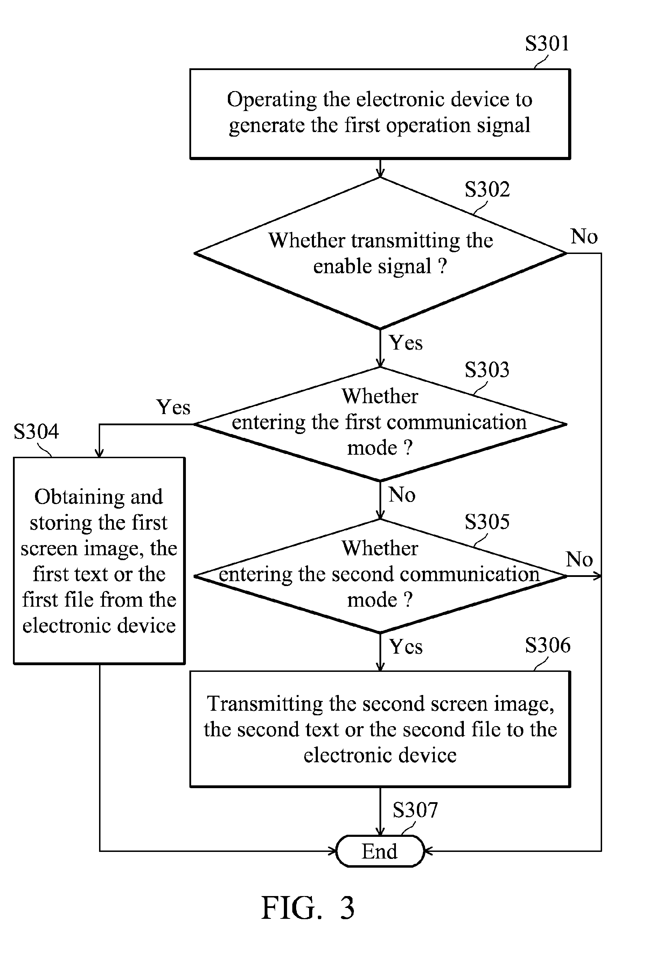

FIG. 3 is a flowchart of the data transmission method for an indication electronic device of the present invention. Firstly on step S301, the indication electronic device 140 operates the electronic device 120 to generate the first operation signal. Then step S302 is performed to determine whether to transmit the enable signal to the electronic device 120. If the enable signal of the indication electronic device 140 is transmitted, then step S303 is performed to determine whether to enter the first communication mode. If the enable signal of the indication electronic device 140 is not transmitted, then step S307 is performed to end the process flow. On step S303, if the first communication mode is entered, then step S304 is performed so that the indication electronic device 140 obtains and stores the first screen image, the first text or the first file from the electronic device 120. If the first communication mode is not entered, then step S305 is performed to determine whether to enter the second communication mode. If the second communication mode is entered on step S305, then step S306 is performed so that the indication electronic device 140 transmits the second screen image, the second text or the second file to the electronic device 120. Then the flow goes to step S307 for completion. If the second communication mode is not entered, then the flow goes to step S207 for completion. For a detailed procedure of the above steps, refer to the illustration of FIG. 1, as it is not repeated again. It should be noted that in another embodiment, step S302 is performed before step S301. In other words, the indication electronic device 140 determines whether to transmit the enable signal to the electronic device 120, then operates the electronic device 120 to generate the first operation signal.

The transmission of data between different electronic devices is implemented by a portable storage device, or through the internet or a cloud solution. However, the portable storage device is a hardware device and the interface of each electronic device is different. The internet and the cloud solution are limited to the environment. In addition, operating the electronic device with a touch pen is very convenient for the user. Generally, the touch pen can only touch the screen but cannot transmit or store the data. Therefore, a more convenient and easy-operating data transmission method is needed.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic device, comprising
a display unit;
an input detection module, configured to detect an operation performed by an indication electronic device to the display unit and generate a first operation signal accordingly, wherein the first operation signal has a position information corresponding to the operation on the display unit;
a communication module; and
a processor, configured to determine whether the electronic device and the indication electronic device are in a first transmission mode or a second transmission mode after receiving an enable signal from the indication electronic device, wherein if the electronic device and the indication electronic device are in the first transmission mode, the processor obtains a first screen image, a first text and/or a first file corresponding to the position information, and stores the first screen image, the first text and/or the first file to the indication electronic device by the communication module, wherein if the electronic device and the indication electronic device are in the second transmission mode, the processor obtains a second screen image, a second text and/or a second file by the communication module and displays on the position of the display unit corresponding to the position information.

2. The electronic device as claimed in claim 1, wherein the indication electronic device is a touch pen, the display unit is a touch panel, and the input detection module is a touch detection circuit of the touch panel to generate a first operation signal according to a touch operation performed by the touch pen to the touch panel.

3. The electronic device as claimed in claim 1, wherein the indication electronic device is an infrared output device, the input detection module is an optical detection circuit arranged on the display unit to generate the first operation signal according to an infrared light projected by the infrared output device to the display unit.

4. The electronic device as claimed in claim 1, wherein the enable signal is generated by an enabling switch of the indication electronic device, or is a second operation signal generated by a second touch operation or a second optical signal transmitted from the indication electronic device to the display unit wherein the second operation signal is detected by the input detection module.

5. A data communication method, utilized on an electronic device including an input detection module, a display unit, a processor and a communication module, comprising:
detecting an operation performed by an indication electronic device to the display unit and generating a first operation signal accordingly, wherein the first operation signal has a position information on the display unit corresponding to the operation;
determining whether the electronic device and the indication electronic device are in a first transmission mode or a second transmission mode after receiving an enable signal from the indication electronic device;
obtaining a first screen image, a first text and/or a first file corresponding to the position information, and storing the first screen image, the first text and/or the first file to the indication electronic device by the communication module if the electronic device and the indication electronic device are in the first transmission mode; and
obtaining a second screen image, a second text and/or a second file by the communication module and displaying on the position of the display unit corresponding to the position information if the electronic device and the indication electronic device are in the second transmission mode.

6. The data communication method as claimed in claim 5, wherein the enable signal is generated by an enabling switch of the indication electronic device, or is a second operation signal generated by a second touch operation or a second optical signal transmitted from the indication electronic device to the display unit wherein the second operation signal is detected by the input detection module.

7. An indication electronic device, comprising an operation signal generator, configured to perform an operation to a display
unit of an electronic device so that an input detection module of the electronic device generates a first operation signal;
a memory unit; and
an indication communication module, configured to receive a first screen image, a first text and/or a first file from the electronic device and store them in the memory unit in a first communication mode after the indication communication module receives an enable signal, and transmit the first screen image, the first text and/or the first file of the memory unit to the electronic device in a second communication mode.

8. The indication electronic device as claimed in claim 7, wherein the indication electronic device is a touch pen, the display unit is a touch panel, and the input detection module is a touch detection circuit of the touch panel to generate a first operation signal according to a touch operation performed by the touch pen to the touch panel.

9. The indication electronic device as claimed in claim 7, wherein the indication electronic device is an infrared output device, the input detection module is an optical detection circuit arranged on the display unit to generate the first operation signal according to an infrared light projected by the infrared output device to the display unit.

10. The indication electronic device as claimed in claim 7, wherein the enable signal is generated by an enabling switch of the indication electronic device, or is a second operation signal generated by a second touch operation or a second optical signal transmitted from the operation signal generator to the display unit.

11. A data communication method, utilized on an indication electronic device including an operation signal generator, a memory unit and an indication communication module, comprising:
performing an operation to a display unit of an electronic device so that the electronic device generates a first operation signal;
generating an enable signal;
receiving a first screen image, a first text and/or a first file from the electronic device and storing on the memory unit if the electronic device and the indication electronic device are in a first transmission mode; and
transmitting a second screen image, a second text and/or a second file to the electronic device if the electronic device and the indication electronic device are in a second transmission mode.

12. The data communication method as claimed in claim 11, wherein the enable signal is generated by an enabling switch of the indication electronic device, or is a second operation signal generated by a second touch operation or a second optical signal transmitted from the operation signal generator to the display unit.
